(19) **Europäisches Patentamt / European Patent Office / Office européen des brevets**

(11) **EP 4 679 330 A1**

(12) **EUROPEAN PATENT APPLICATION**
published in accordance with Art. 153(4) EPC

(43) Date of publication:
14.01.2026 Bulletin 2026/03

(21) Application number: 24826326.1

(22) Date of filing: 24.06.2024

(51) International Patent Classification (IPC):
$G06N\ 3/096^{(2023.01)}$     $G06N\ 3/045^{(2023.01)}$
$G06N\ 3/0455^{(2023.01)}$

(52) Cooperative Patent Classification (CPC):
G06N 3/045; G06N 3/0455; G06N 3/096

(86) International application number:
PCT/KR2024/008734

(87) International publication number:
WO 2024/263011 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.06.2023 KR 20230080779

(71) Applicant: LG Management Development Institute
Co., Ltd.
Seoul 07336 (KR)

(72) Inventors:
• JEONG, Dae Woong
  Seoul 07523 (KR)
• KO, Sung Moon
  Seoul 01849 (KR)
• LEE, Su Min
  Seoul 01849 (KR)
• HAN, Se Hui
  Seoul 07665 (KR)

(74) Representative: BCKIP Part mbB
MK1
Landsbergerstraße 98, 3.Stock
80339 München (DE)

(54) **MULTI-TASKING MODEL TRAINING METHOD AND MULTI-TASKING PERFORMING METHOD USING MACHINE LEARNING MODEL TRAINED ON BASIS THEREOF**

(57)    A multi-tasking model training method and a multi-tasking performing method using a machine learning model trained on the basis thereof, according to an embodiment of the present invention, may mutually transfer and learn knowledge data of a latent space for each task through geometric alignment in one integrated latent space in order to process a multi-task for output according to a plurality of domains.

【Fig. 9】

SET UP TRAINING LOOP — S201

OBTAIN GEOMETRIC ALIGNMENT VECTOR BASED ON EXPERIMENTAL DATA — S203

CALCULATE GEOMETRIC ALIGNMENT LOSS BASED ON OBTAINED GEOMETRIC ALIGNMENT VECTOR — S205

OPTIMIZE CALCULATED GEOMETRIC ALIGNMENT LOSS-BASED MODEL AND UPDATE PARAMETERS — S207

END TRAINING — S209

**Description**

[Technical Field]

The present invention relates to a multi-tasking model training method and a multi-tasking performing method using a machine learning model trained based thereon. More specifically, the present invention relates to a multi-tasking model training method that mutually transfers and learns knowledge data of a latent space for each task through geometric alignment in one integrated latent space in order to process a multi-task for output according to a plurality of domains, and a multi-tasking performing method using a machine learning model trained based thereon.

[Background Art]

Machine learning and artificial intelligence models require large amounts of data. However, realistically, there are limits to always containing sufficient data. This is especially worse when trying to apply the model to new domains or tasks. A representative example of this situation is the molecular structure data set. In the fields of chemistry and pharmacology, data is needed to predict the characteristics of new molecules, but experimental data for each molecule is difficult to obtain and is costly. Accordingly, the need for transfer learning techniques that apply the knowledge of presently trained models to new tasks has increased.

However, existing transfer learning has been developed mainly focusing on classification issues of large-scale data sets such as image or text data. Accordingly, existing transfer learning techniques show limitations when applied to small, complex data sets such as regression problems or molecular data sets. In particular, in high-dimensional problems such as molecular structure data where the relationship between each component and bond is very important, existing Euclidean space-based transfer learning techniques may not effectively handle complex structures in such non-Euclidean spaces.

Riemannian geometry enables calculus in curved spaces, allowing for better representation and analysis of complex structures in data. This Riemannian geometric approach assumes that latent vectors exist on a curved manifold, which is advantageous for aligning the geometry between source and target tasks.

Accordingly, based on the above background, it is necessary to introduce a new technology that may demonstrate high prediction performance and stability even on small data sets, implement more effective transfer learning, and improve model normalization performance to enhance regularization performance.

[Invention]

[Technical Problem]

An aspect of an embodiment of the present invention is directed to providing a multi-tasking model training method that mutually transfers and learns knowledge data of a latent space for each task through geometric alignment in one integrated latent space in order to process a multi-task for output according to a plurality of domains, and a multi-tasking performing method using a machine learning model trained based thereon.

However, the technical tasks of an embodiment of the present invention are not limited to those as described above, and other technical tasks may exist.

[Technical Solution]

A multi-tasking model training method according to an embodiment of the present invention is a method for a computing system including a memory and a processor to train a multi-tasking model, wherein the method includes: initializing the multi-tasking model that processes a multi-task based on a plurality of domains; obtaining predetermined experimental data; and training the multi-tasking model based on the obtained experimental data, wherein the training of the multi-tasking model includes: obtaining a geometric alignment vector, which is a vector that supports geometric alignment between data in one integrated latent space (manifold), based on the experimental data; computing a geometric alignment loss based on the obtained geometric alignment vector; and updating parameters of the multi-tasking model based on the computed geometric alignment loss.

In another aspect, the obtaining of the geometric alignment vector includes obtaining an embedding vector transformed into a vector format by projecting the experimental data onto a predetermined embedding space based on an embedding module included in the multi-tasking model.

In another aspect, the obtaining of the geometric alignment vector further includes obtaining a plurality of perturbation vectors that move the embedding vector in a predetermined direction based on a perturbation module included in the multi-tasking model.

In another aspect, the obtaining of the geometric alignment vector further includes: obtaining an original latent vector by projecting the embedding vector onto a latent space of a first task (Task 1) based on an encoder module included in the multi-tasking model; and obtaining a perturbation latent vector by projecting the perturbation vector onto the latent space of the first task based on the encoder module included in the multi-tasking model.

In another aspect, the obtaining of the geometric alignment vector further includes: obtaining an original transfer vector that maps the original latent vector to the latent space of a second task (Task 2) based on a transfer module included in the multi-tasking model; and obtaining a perturbation transfer vector that maps the perturbation latent vector to the latent space of the second task based on the transfer module included in the multi-tasking model.

In another aspect, the obtaining of the geometric alignment vector further includes: obtaining an original inverse vector obtained by remapping the original transfer vector to the latent space of the first task based on an inverse transfer module included in the multi-tasking model; and obtaining a perturbation inverse vector obtained by remapping the perturbation transfer vector to the latent space of the first task based on the inverse transfer module included in the multi-tasking model.

In another aspect, the computation of the geometric alignment loss includes: computing a regression loss, an autoencoder loss, a consistency loss, a mapping loss, and a distance loss based on the geometric alignment vector; and computing an integrated loss by weighted summing the computed regression loss, autoencoder loss, consistency loss, mapping loss, and distance loss.

In another aspect, the updating of the parameters of the multi-tasking model includes updating the parameters in a direction that minimizes the integrated loss.

In another aspect, the computation of the geometric alignment loss further includes: obtaining a prediction value according to a latent vector based on a regressor module included in the multi-tasking model; calculating a mean squared error based on the obtained prediction value and a label value corresponding to the latent vector; and computing the regression loss based on the calculated mean squared error.

In another aspect, the computation of the geometric alignment loss further includes: calculating a mean squared error based on the original latent vector and the original inverse vector; and computing the autoencoder loss based on the calculated mean squared error.

In another aspect, the computation of the geometric alignment loss further includes: calculating a mean squared error based on a perturbation transfer vector mapped from the latent space of the first task to the latent space of the second task and a perturbation transfer vector mapped from the latent space of the second task to the latent space of the first task; and computing the consistency loss based on the calculated mean squared error.

In another aspect, the computation of the geometric alignment loss further includes: calculating a mean squared error based on a label value based on the first task and a prediction value according to the original inverse vector based on the second task; and computing the mapping loss based on the calculated mean squared error.

In another aspect, the computation of the geometric alignment loss further includes: calculating a first transfer vector displacement, which is a distance between the original transfer vector and the perturbation transfer vector based on the first task; calculating a second transfer vector displacement, which is a distance between the original transfer vector and the perturbation transfer vector based on the second task; calculating a mean squared error based on the calculated first transfer vector displacement and second transfer vector displacement; and computing the distance loss based on the calculated mean squared error.

In another aspect, the experimental data includes material unique characteristic information, which is information specifying a unique characteristic possessed by a predetermined material, and material physical property specific information, which is information specifying a data value possessed by a predetermined material for a predetermined physical property.

A multi-tasking model learning server according to an embodiment of the present invention includes: at least one memory; and at least one processor for training a multi-tasking model by reading at least one application stored in the memory, wherein instructions of the processor include instructions for: initializing the multi-tasking model that processes a multi-task based on a plurality of domains; obtaining predetermined experimental data; obtaining a geometric alignment vector, which is a vector that supports geometric alignment between data in one integrated latent space (manifold), based on the obtained experimental data; computing a geometric alignment loss based on the obtained geometric alignment vector; and updating parameters of the multi-tasking model based on the computed geometric alignment loss.

[Advantageous Effects]

A multi-tasking model training method and a multi-tasking performing method using a machine learning model trained based thereon according to an embodiment of the present invention can provide a multi-tasking model that maintains high performance even in a small data set by addressing the issue of insufficient data by transferring knowledge trained in a source task to a target task through transfer learning.

Accordingly, the multi-tasking model training method and the multi-tasking performing method using the machine learning model trained based thereon according to an embodiment of the present invention can expand the scope of application to fields where it was difficult to apply the machine learning model due to insufficient data or domain knowledge.

In addition, the multi-tasking model training method and the multi-tasking performing method using the machine learning model trained based thereon according to an embodiment of the present invention provide a specialized transfer learning technique that can be effectively applied to regression problems, thereby demonstrating high prediction performance even in complex regression problems such as molecular data sets.

In addition, the multi-tasking model training method and the multi-tasking performing method using the machine learning model trained based thereon according to an embodiment of the present invention can improve the efficiency of transfer learning by maintaining geometric consistency between tasks by optimizing knowledge transfer between source tasks and target tasks through a Riemannian geometric approach.

In addition, the multi-tasking model training method and the multi-tasking performing method using the machine learning model trained based thereon according to an embodiment of the present invention can further improve the generalization performance of the model by combining multiple loss functions to regularize various aspects of the model.

Accordingly, the multi-tasking model training method and the multi-tasking performing method using the machine learning model trained based thereon according to an embodiment of the present invention provide a multi-tasking model that can be universally utilized for various materials (substances), thereby improving the quality of the related industry as a whole.

However, the benefits of the present invention are not limited to those mentioned above, and other benefits not mentioned may be clearly understood from the following description.

[Description of Drawings]

FIG. 1 illustrates an example block diagram of a computing system implementing a multi-tasking learning model provision service according to an embodiment of the present invention.

FIG. 2 illustrates an example block diagram of a computing device implementing a multi-tasking learning model provision service according to an embodiment of the present invention.

FIG. 3 illustrates an example block diagram of another aspect of a computing device implementing a multi-tasking learning model provision service according to an embodiment of the present invention.

FIGS. 4 and 5 illustrate example conceptual diagrams of a multi-tasking learning model according to an embodiment of the present invention.

FIG. 6 illustrates an internal block diagram of a multi-tasking learning model according to an embodiment of the present invention.

FIG. 7 illustrates an example conceptual diagram of a multi-tasking model training method according to an embodiment of the present invention.

FIG. 8 illustrates a block flow diagram of a multi-tasking model training method according to an embodiment of the present invention.

FIG. 9 illustrates a block flow diagram of a multi-tasking learning model training method according to an embodiment of the present invention.

FIG. 10 illustrates an example conceptual diagram of a multi-tasking learning model training method according to an embodiment of the present invention.

FIGS. 11 and 12 illustrate example diagrams of a method for computing regression loss according to an embodiment of the present invention.

FIG. 13 illustrates an example diagram of an integrated latent space mapping method according to an embodiment of the present invention.

FIGS. 14 and 15 illustrate example diagrams of a consistency loss computation method according to an embodiment of the present invention.

FIGS. 16 and 17 illustrate example diagrams of a mapping loss computation method according to an embodiment of the present invention.

FIG. 18 illustrates an example diagram of an integrated loss computation method according to an embodiment of the present invention.

[Mode for Invention]

Embodiments can impose various transformations that can have various embodiments, and specific embodiments illustrated in the drawings will be described in detail in the detailed description. The advantages, features and methods for achieving the same will become apparent from the following description of the embodiments given in conjunction with the accompanying drawings. However, the present invention is not limited to the embodiments described herein but may be embodied in many different forms. It will be understood that, although the terms "first" or "second" may be used herein to distinguish one component from another component, these components should not be limited by these terms. In addition, a singular expression includes a plural expression, unless the context clearly states otherwise. In addition, it should be understood that the terms such as "include" or "have" are merely intended to indicate that features, or components described in the specification are present, and are not intended to exclude the possibility that one or more other features, or components will be added. In addition, components in the drawings may be exaggerated or shrunk for the convenience of descriptions. For example, since the size and thickness of each element in the drawings has been arbitrarily modified for the convenience of descriptions, it should be noted that the present invention is not necessarily limited to what has been shown in the drawings.

Hereinafter, embodiments of the present invention will be described in detail with reference to appended drawings. Throughout the specification, the same or corresponding component is assigned the same reference numeral, and repeated descriptions thereof will be omitted.

[Exemplary System Implementing Multi-tasking Learning Model Provision Service]

Hereinafter, an exemplary system for implementing a multi-tasking learning model provision service that mutually transfers and learns knowledge data of a latent space for each task through geometric alignment in one integrated latent space in order to process a multi-task for output according to a plurality of domains and performs multi-tasking based thereon is described in detail with reference to the attached drawings.

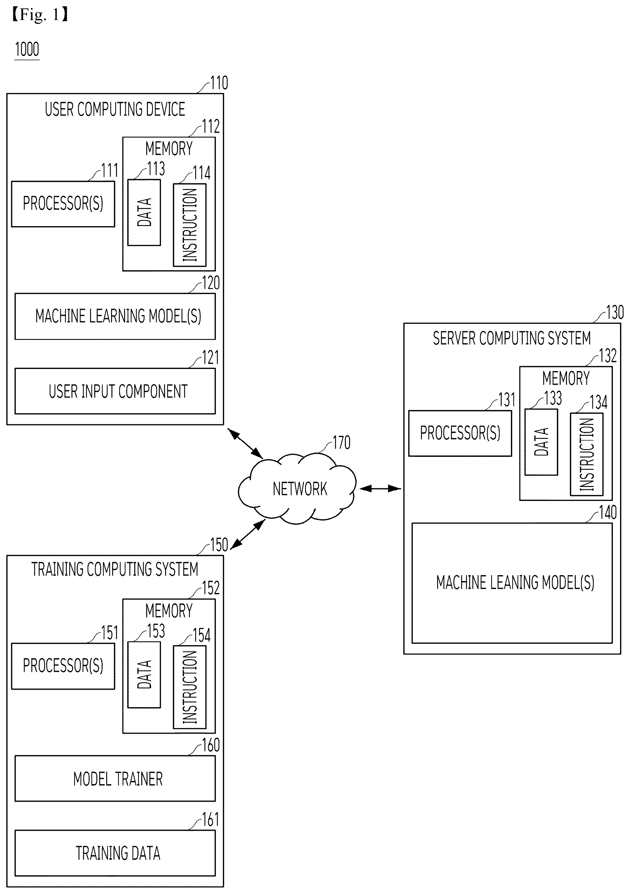

FIG. 1 illustrates an example block diagram of a computing system implementing an multi-tasking learning model provision service according to an embodiment of the present invention.

Referring to FIG. 1, a computing system 1000 which implements the multi-tasking learning model provision service according to an embodiment of the present invention includes a user computing device 110, a server computing system 130, and a training computing system 150, and any other devices which are configured to communicate through a network 170.

A multi-tasking model training method and a multi-tasking performing method using a machine learning model trained based thereon according to an embodiment of the present invention may 1) be implemented and provided locally by the user computing device 110, 2) implemented and provided in the form of a web service by the server computing system 130 which communicates with the user computing device 110, and 3) implemented and provided by mutual association of the user computing device 110 and the server computing system 130.

In this connection, in an embodiment, the user computing device 110 and/or the server computing system 130 may train a machine learning model 120 and/or 140 through interaction with the training computing system 150 communicationally connected through the network 170. The training computing system 150 may be a system separated from the server computing system 130 or may be a portion of the server computing system 130.

In addition, in this connection, the artificial intelligence model may be 1) directly trained locally by the user computing device 110, 2) trained while the server computing system 130 and the user computing device 110 interact with each other through the network 170, and 3) trained by using various training techniques and learning techniques by the separate training computing system 150. In addition, the method may also be implemented by a method in which the artificial intelligence model trained by the training computing system 150 is transmitted to the user computing device 110 and/or the server computing system 130 through the network 170, and is provided and updated.

In some embodiments, the training computing system 150 may be a portion of the server computing system 130 or a portion of the user computing device 110.

The user computing device 110 may include various types of computing devices such as a smart phone, a cellular phone, a digital broadcasting device, personal digital assistants (PDA), a portable multimedia player (PMP), a desktop, a wearable device, an embedded computing device, and/or a tablet PC.

The user computing device 110 includes at least one processor 111 and a memory 112. Herein, the processor 110 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 112 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 112 may store data 113 and instructions 114 necessary for the at least one processor 111 to perform a functional operation, such as training the artificial intelligence model or executing multi-tasking learning through the artificial intelligence model.

In an embodiment, the user computing device 110 may store at least one machine learning model 120.

Specifically, the user computing device 110 may be various machine learning models such as a plurality of neural networks (for example, deep neural networks) or other types of machine learning models, including non-linear models and/or linear models, and may be configured of a combination thereof.

In this connection, the neural network may include at least one of feed-forward neural networks, recurrent neural networks (for example, long short-term memory recurrent neural networks), convolutional neural networks and/or other forms of neural networks.

In an embodiment, the user computing device 110 may receive at least one machine learning model 120 from the server computing system 130 via the network 170, store the same in the memory 112, and then execute the stored machine learning model 120 by the processor 111 to perform the multi-tasking learning.

In another embodiment, the server computing system 130 may include at least one machine learning model 140 and perform operations through the machine learning model 140, and may provide the multi-tasking learning model provision service to a user by linking with the user computing device 110 in a manner of communicating data related thereto with the user computing device 110.

For example, the user computing device 110 may perform the multi-tasking learning model provision service by providing an output for the input of a user using the machine learning model 140 through the server computing system 130 via the web.

In addition, the artificial intelligence model may also be implemented in such a way that at least some of the machine learning models 120 and/or 140 are executed on the user computing device 110 and the rest are executed on the server computing system 130.

In addition, the user computing device 110 may include at least one input component 121 that detects user input. For example, the user input component 121 may include a touch sensor (for example, a touch screen and/or a touch pad) that detects touch of an input medium of a user (for example, a finger or a stylus), an image sensor that detects a motion input of a user, a microphone, a button, a mouse and/or a keyboard that detects user voice input. In addition, the user input component 121 may include an interface and an external controller when receiving input from an external controller (for example, a mouse or a keyboard) through the interface.

The server computing system 130 includes at least one processor 131 and a memory 132. Herein, the processor 131 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

In addition, the memory 132 may include one or more non-transitory/transitory computer-readable storage media, such as RAM, ROM, EEPROM, EPROM, flash memory devices, or magnetic disks, and combinations thereof. The memory 132 may store data 133 and instructions 134 required for the processors 131 to perform a functional operation such as the train of the artificial intelligence model or the execution of the multi-tasking learning through the artificial intelligence model.

In an embodiment, the server computing system 130 may be implemented to include one or more computing devices or computers. For example, the server computing system 130 may be implemented so that a plurality of computing devices operate according to sequential computing architecture, parallel computing architecture, or a combination thereof. Further, the server computing system 130 may include a plurality of computing devices connected through the network 170.

Further, the server computing device 130 may store one or more machine learning models 140. For example, the server computing system 130 may include a neural network and/or multilayer non-linear model as the machine learning model 140. An exemplary neural network may include a feed-forward neural network, a deep neural network, a recurrent neural network, and a convolution neural network.

The training computing system 150 includes at least one processor 151 and a memory 152. Herein, the processor 151 may be configured of at least one or a plurality of processors electrically connected among the CPU, the GPU, the ASICs, the DSPs, the DSPDs, the PLDs, the FPGAs, controllers, micro-controllers, microprocessors, and/or other electrical units for performing functions.

In addition, the memory 152 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 152 may store data 153 and instructions 154 necessary for the processor 151 to perform training of the artificial intelligence model.

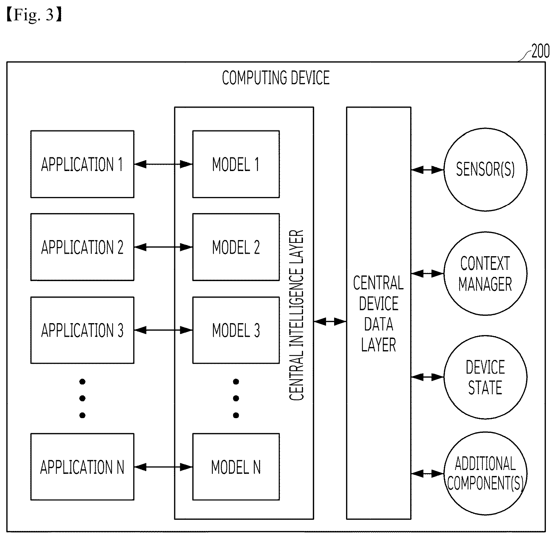

For example, the training computing system 150 may include a model trainer 160 configured to train the machine learning models 120 and/or 140 stored in the user computing device 110 and/or the server computing system 130 by using various training or learning techniques such as backpropagation of an error (according to the framework illustrated in FIG. 3).

For example, the model trainer 160 may perform updating one or more parameters of the machine learning models 120 and/or 140 based on a defined loss function by a backpropagation scheme.

In some implementation examples, the performance of the backpropagation of the error may include performing truncated backpropagation through time. The model trainer 160 may perform multiple generalization techniques (for example, weight reduction, drop-out, and/or knowledge distillation) in order to enhance a generalization capability of the trained machine learning models 120 and/or 140.

In particular, the model trainer 160 may train the machine learning models 120 and/or 140 based on a series of training data 161. Herein, the training data 161 may include, for example, different formats of data such as an image, an audio, and/or text. Examples of image type data which may be used may include a video frame, LiDAR point cloud, an X-ray image, a computer tomography scan, a hyperspectral image, and/or various other types of images.

The training data 161 may be provided by the user computing device 110 and/or the server computing system 130. When the training computing device 150 trains the machine learning models 120 and/or 140 with respect to specific data of the user computing device 110, the machine learning models 120 and/or 140 may be characterized as a personalized model.

In addition, the model trainer 160 includes a computer logic utilized to provide a desired function.

Further, the model trainer 160 may be implemented as hardware, firmware, and/or software controlling a universal processor. In one implementation example, the model trainer 160 may include a program file stored in a storage device, and may be loaded to the memory 152 and executed by one or more processors 151. In another implementation example, the model trainer 160 includes one or more sets of computer-executable data 153 and instructions 154 stored in executable by a tangible computer-readable storage medium such as a RAM hard disk or an optical or magnetic medium.

The network 170 includes a 3rd Generation Partnership Project (3GPP) network, a Long Term Evolution (LTE) network, a World Interoperability for Microwave Access (WIMAX) network, Internet, a Local Area Network (LAN), Wireless Local Area Network (LAN), a Wide Area Network (WAN), a Personal Area Network (PAN), a Bluetooth network, a satellite broadcasting network, an analog broadcasting network, and/or a Digital Multimedia Broadcasting (DMB) network, but is not limited thereto.

In general, communication through the network 170 may be performed through various communication protocols (for example, TCP/IP, HTTP, SMTP, and/or FTP), encoding or formats (for example, HTML and/or XML), and/or protective schemas (for example, VPN, secure HTTP, and/or SSL) by using any type of wired and/or wireless communication.

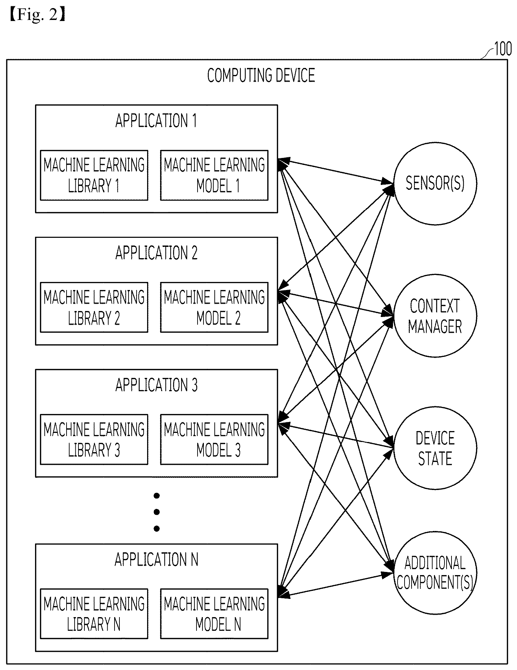

FIG. 2 illustrates an example block diagram of a computing device implementing a multi-tasking learning model provision service according to an embodiment of the present invention.

Referring to FIG. 2, the computing device 100 included in the user computing device 110, the server computing system 130, and the training computing system 150 includes a plurality of applications (for example, application 1 to application N). Each application may include a machine learning library and at least one machine learning model. For example, the applications may include an image processing (for example, detection, classification and/or segmentation) application, a text messaging application, an e-mail application, a dictation application, a virtual keyboard application, a browser application, and a chat-bot application.

In an embodiment, the computing device 100 may include the model trainer 160 for training the artificial intelligence model, and may store and operate the trained artificial intelligence model to provide output data according to predetermined input data (in an embodiment, material unique characteristic information and/or material physical property specific information).

Each application of the computing device 100 may communicate with a number of other components of the computing device, such as, for example, one or more sensors, a context manager, a device state component, and/or additional components. In an embodiment, each application may communicate with each device component using an API (for example, a public API). In an embodiment, the API used by each application may be specific to the relevant application.

FIG. 3 illustrates an example block diagram of another aspect of a computing device implementing a multi-tasking learning model provision service according to an embodiment of the present invention.

Referring to FIG. 3, a computing device 200 includes a plurality of applications (for example, application 1 to application N). Each application is in communication with a central intelligence layer. For example, the applications may include an image processing application, a text messaging application, an e-mail application, a dictation application, a virtual keyboard application, and a browser application. In an embodiment, each application may communicate with the central intelligence layer (and model(s) stored therein) using an API (for example, a common API across all applications).

In addition, the central intelligence layer may include a plurality of machine learning models. For example, as illustrated in FIG. 3, a respective machine learning model and at least some thereof may be provided for each application and managed by the central intelligence layer. In other implementations, two or more applications may share a single machine leaning model. For example, in some implementations, the central intelligence layer may provide a single model for all of the applications. In some implementations, the central intelligence layer may be included within an operating system of the computing device 200 or implemented differently.

The central intelligence layer may communicate with a central device data layer. The central device data layer may be a centralized data storage for the computing device 200. As illustrated in FIG. 3, the central device data layer may communicate with a number of other components of the computing device 200, such as, for example, one or more sensors, a context manager, a device state component, and/or additional components. In some implementations, the central device data layer may communicate with each device component using an API (for example, a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein may be implemented using a single device or component or a plurality of devices or components working in combination. Databases and applications may be implemented on a single system or distributed across a plurality of systems. Distributed components may operate sequentially or in parallel.

[Multi-tasking Learning Model (MtLM)]

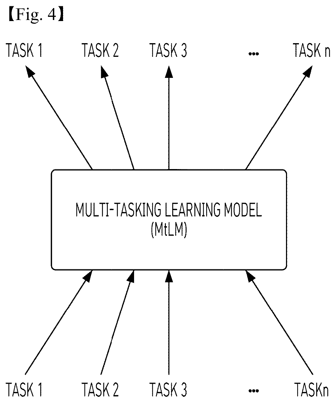

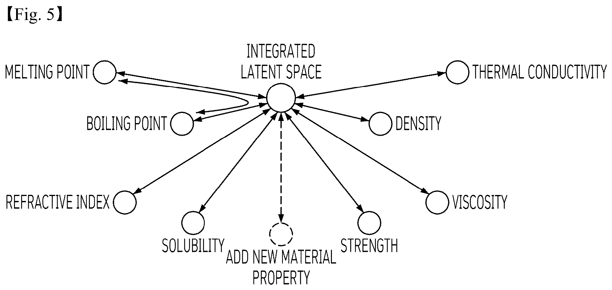

FIGS. 4 and 5 illustrate example conceptual diagrams of the MtLM according to an embodiment of the present invention.

Referring to FIGS. 4 and 5, the MtLM (geometrically aligned transfer encoder model) according to an embodiment of the present invention may be a machine learning model that mutually aligns fragmented knowledge data (in an embodiment, a latent vector) in a latent space for each task through geometric transfer in one integrated latent space (M: Manifold) in order to process a multi-task for output according to the plurality of domains.

In other words, the MtLM according to an embodiment not only simultaneously learns knowledge data according to various domains but also efficiently learns relationships between multiple domains, thereby expanding the learning area and simultaneously performing effective multi-tasking learning that implements batch learning of local patterns according to each domain and common principles between the plurality of domains.

Accordingly, the MtLM may directly improve the processing performance and accuracy of various multi-tasking tasks based on the model trained as above.

In an embodiment, the MtLM may perform pre-training based on predetermined experimental data.

Herein, the experimental data according to an embodiment may be data including predetermined material unique characteristic information and material physical property specific information as learning data used for training the MtLM.

In this connection, the material unique characteristic information according to an embodiment may be information that specifies the unique characteristics possessed by a predetermined material.

For example, the material unique characteristic information may include a predetermined material name, molecular structural formula, and/or chemical formula.

In addition, the material physical property specific information according to an embodiment may be information that specifies the data value that a predetermined material has for a predetermined physical property.

For example, the material physical property specific information may include physical property (in other words, domain) values such as boiling point, melting point, refractive index, solubility, viscosity, surface tension, density, strength, and/or thermal conductivity of a predetermined material.

The MtLM that performed pre-learning as described above in an embodiment may input predetermined material unique characteristic information and/or material physical property specific information, and output predicted data based on the input information and trained knowledge.

In an embodiment, the MtLM may receive predetermined material unique characteristic information and output predicted material physical property specific information based on the received information and trained knowledge.

In another embodiment, the MtLM may receive predetermined material physical property specific information and output predicted material unique characteristic information based on the received information and trained knowledge.

In another embodiment, the MtLM may receive predetermined material unique characteristic information and material physical property specific information, and output optimal material unique characteristic information and material physical property characteristics information predicted based on the received information and trained knowledge.

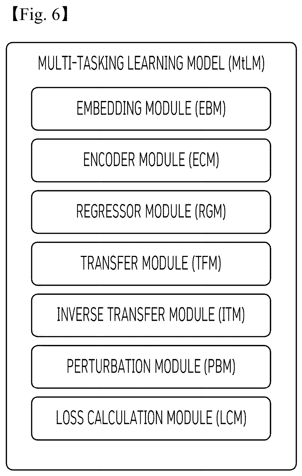

FIG. 6 illustrates an internal block diagram of the MtLM according to an embodiment of the present invention.

Referring to FIG. 6, in another aspect, the MtLM according to an embodiment may include at least one of an embedding module (EBM), an encoder module (ECM), a regressor module (RGM), a transfer module (TFM), an inverse transfer module (ITM), a perturbation module (PBM), or a loss calculation module (LCM).

In detail, the EBM according to an embodiment of the present invention may be a pre-encoder module that transforms predetermined input data into an embedding vector.

In other words, the EBM may be a module that transforms specific input data into a vector format by projecting the same onto a predetermined embedding space.

In an embodiment, the EBM may provide an embedding vector for input data based on a directed message passing neural network (DMPNN) structure.

In addition, the ECM according to an embodiment of the present invention may be a module that takes a predetermined embedding vector as input and transforms the input embedding vector into a latent vector by projecting the same onto a latent space corresponding to the task.

In other words, the ECM may be a module that extracts the main features of the input embedding vector and expresses the same on the corresponding latent space.

In an embodiment, the ECM may include a plurality of ECMs corresponding to each of the plurality of domains.

In an embodiment, the ECM may include a first ECM corresponding to a first domain (for example, boiling point) and a second ECM corresponding to a second domain (for example, melting point).

In this connection, in an embodiment, one of the plurality of ECMs may be a source ECM corresponding to a source task of transfer learning according to an embodiment of the present invention.

In addition, any one of the remaining ECMs excluding the source ECM may be a target ECM corresponding to a target task of transfer learning according to an embodiment of the present invention.

In addition, the RGM according to an embodiment of the present invention may be a head module that takes a predetermined latent vector as input and generates a final prediction value according to the input latent vector.

The RGM may be directly involved in generating the final output and thus determine the prediction performance of a model.

In addition, in an embodiment, the RGM may include a plurality of RGMs corresponding to each of the plurality of domains.

In an embodiment, the RGM may include a first RGM corresponding to a first domain (for example, boiling point) and a second RGM corresponding to a second domain (for example, melting point).

In this connection, in an embodiment, one of the plurality of RGMs may be a source RGM, which is the RGM corresponding to a source task of transfer learning according to an embodiment of the present invention.

In addition, any one of the remaining RGMs excluding the source RGM may be a target RGM corresponding to a target task of transfer learning according to an embodiment of the present invention.

In addition, the TFM according to an embodiment of the present invention may be a module that transforms a predetermined latent vector into a transfer vector by mapping the same to a latent space of another task.

In detail, in an embodiment, the TFM may transform a specific latent vector into a transfer vector by mapping the same to the latent space of another task based on Riemannian geometry.

In this process, the TFM may implement the geometric alignment between each mapped task according to an embodiment of the present invention. A detailed explanation thereof is provided later in the multi-tasking model training method.

In other words, in an embodiment, the TFM may effectively perform the transfer of knowledge data between a plurality of tasks by mapping the latent vector according to a first task to the latent space according to a second task through the geometric alignment according to an embodiment of the present invention.

In this connection, in an embodiment, the TFM may support data processing that improves the accuracy and consistency of the transformed vector (in other words, the transfer vector) by utilizing an autoencoder structure.

In addition, in an embodiment, the TFM may include a plurality of TFMs corresponding to each of the plurality of domains.

In an embodiment, the TFM may include a first TFM corresponding to a first domain (for example, boiling point) and a second TFM corresponding to a second domain (for example, melting point).

In this connection, in an embodiment, one of the plurality of TFMs may be a source TFM, which is the TFM corresponding to a source task of transfer learning according to an embodiment of the present invention.

In addition, any one of the remaining TFMs excluding the source TFM may be a target TFM, which is the TFM corresponding to a target task of transfer learning according to an embodiment of the present invention.

In addition, the ITM according to an embodiment of the present invention may be a module that reconstructs a transfer vector mapped and transformed into a latent space of another task by the TFM so as to be mapped back to the original latent space.

Thus, in an embodiment, the ITM may generate a vector (hereinafter, an inverse vector) that reconstructs and transforms a transfer vector back to its original state.

In this connection, in an embodiment, the ITM may improve the stability of the aforementioned reconstruction process and the accuracy and consistency of the corresponding transfer vector by utilizing the autoencoder structure.

In an embodiment, the ITM may include a plurality of ITMs corresponding to each of the plurality of domains.

In an embodiment, the ITM may include a first ITM corresponding to a first domain (for example, boiling point) and a second ITM corresponding to a second domain (for example, melting point).

In this connection, in an embodiment, one of the plurality of ITMs may be a source ITM, which the ITM corresponding to a source task of transfer learning according to an embodiment of the present invention.

In addition, any one of the remaining ITMs excluding the source ITM may be a target ITM corresponding to a target task of transfer learning according to an embodiment of the present invention.

In addition, the PBM according to an embodiment of the present invention may be a module that generates a plurality of perturbation vectors by applying a predetermined change to a predetermined embedding vector.

In detail, in an embodiment, the PBM may be a module that generates a plurality of perturbation vectors (in other words, perturbation points) on the periphery based on a specific embedding vector by applying a change that moves the corresponding embedding vector in a predetermined direction.

In this connection, the plurality of generated perturbation vectors are designed to maintain a relative distance from the corresponding embedding vector, thereby effectively assisting the geometric alignment.

In other words, the aforementioned PBM may help align the coordinate systems between a source task and a target task by generating the plurality of perturbation vectors to assist in the geometric alignment of the model.

In addition, in an embodiment, the PBM may compute the distance between a predetermined embedding vector and the plurality of perturbation vectors generated based thereon, and support matching the displacement between the source task and the target task based on the computed distance.

This allows the PBM to more easily maintain consistency in the latent space for the model.

According to an embodiment, the PBM may prevent overfitting of the model and improve generalization performance by forcing a relationship between a predetermined embedding vector and the plurality of perturbation vectors generated based thereon to be maintained.

In addition, the LCM according to an embodiment of the present invention may be a module that calculates various loss functions based on various vectors obtained through the MtLM.

In an embodiment, the LCM may compute regression loss, autoencoder loss, consistency loss, mapping loss, distance loss, and/or integrated loss according to an embodiment of the present invention. A detailed explanation thereof is provided later in the multi-tasking model training method.

This allows the LCM to support regularization and learning for different portions of the model, and to provide feedback for model learning, enabling model optimization.

In an embodiment of the present invention, the MtLM may perform model optimization and update through various data processing processes linked with the modules described above.

For example, the MtLM may perform model optimization and parameter update in conjunction with the modules described above based on an AdamW optimization algorithm.

As such, in an embodiment of the present invention, the MtLM not only simultaneously learns knowledge data according to various domains, but also efficiently learns relationships between multiple domains, thereby expanding the learning area and simultaneously performing effective multi-tasking learning that implements batch learning of local patterns according to each domain and common principles between the plurality of domains.

Accordingly, the MtLM may directly improve the processing performance and accuracy of various multi-tasking tasks based on the model trained as above.

[Method for Implementing Multi-tasking Learning Model Provision Service]

Hereinafter, a method for implementing the MtLM provision service that mutually transfers and learns knowledge data of a latent space for each task through the geometric alignment in one integrated latent space in order to process a multi-task for output according to a plurality of domains and performs multi-tasking based thereon by a computing system 1000 according to an embodiment of the present invention is described in detail.

In general, existing transfer learning techniques are mainly focused on classification tasks of image and/or language data sets, and have limitations in addressing regression problems or problems in non-Euclidean spaces.

In particular, when the training data set is insufficient, the decline in prediction performance for the aforementioned problems is more inevitable, and when multi-tasking considering various task types is required, the decline in performance is aggravated in learning and prediction therefor.

In addition, most existing methods are optimized for handling data in Euclidean space, and thus do not operate effectively in complex curved spaces or nonlinear spaces.

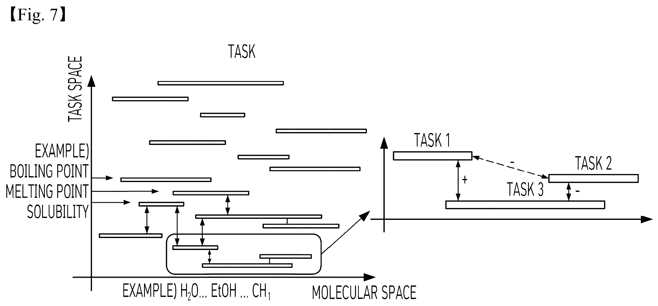

FIG. 7 illustrates an example conceptual diagram of a multi-tasking model training method according to an embodiment of the present invention.

Accordingly, as shown in FIG. 7, the computing system 1000 according to an embodiment of the present invention aims to provide a new multi-tasking model training method that may overcome the regression problem of a small data set and the limitations of existing transfer learning techniques, and a multi-tasking performing method using a machine learning model trained based thereon.

Hereinafter, in the description according to an embodiment of the present invention, for the sake of effective description, the material described above is limited to a "molecule" and the domain thereof is described based on a "physical property."

This is because molecular data sets typically have small amounts of data, contain diverse task types, and primarily deal with regression problems.

In other words, in the case of molecular data sets, various task processing linked to numerous physical properties is required, but the data given therefor is very limited, and each physical property has the characteristic of being closely associated with or influencing each other.

In light of this, the molecular data set is advantageously applicable to multi-task processing across the plurality of domains, and may be a desirable example for explaining the multi-tasking model training method and the multi-tasking performing method using the machine learning model trained based thereon according to an embodiment of the present invention.

However, it is not limited thereto, and it is obvious that any embodiment that may apply multi-tasks according to the plurality of domains may be included in an embodiment of the present invention.

Hereinafter, the multi-tasking model training method and the multi-tasking performing method using the machine learning model trained based thereon according to an embodiment of the present invention will be described in more detail with reference to the attached drawings.

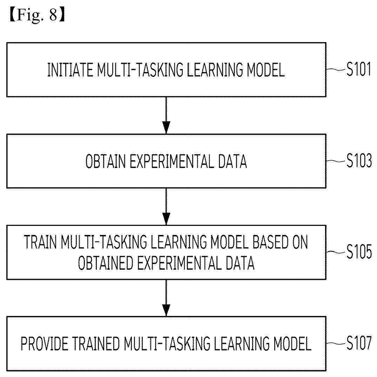

FIG. 8 illustrates a block flow diagram of a multi-tasking model training method according to an embodiment of the present invention.

Referring to FIG. 8, the multi-tasking model training method and the multi-tasking performing method using the machine learning model trained based thereon according to an embodiment of the present invention may include: initializing the MtLM (S101); obtaining experimental data (S103); training the MtLM based on the obtained experimental data (S105); and providing the trained MtLM (S107).

In detail, the computing system 1000 according to an embodiment of the present invention may initialize the MtLM (S101).

Herein, in other words, the MtLM (geometrically aligned transfer encoder model) according to an embodiment of the present invention may be a machine learning model that mutually aligns fragmented knowledge data (in an embodiment, a latent vector) in a latent space for each task through geometric transfer in one integrated latent space (M) in order to process a multi-task for output according to the plurality of domains.

In other words, the MtLM according to an embodiment not only simultaneously learns knowledge data according to various domains but also efficiently learns relationships between multiple domains, thereby expanding the learning area and simultaneously performing effective multi-tasking learning that implements batch learning of local patterns according to each domain and common principles between the plurality of domains.

In detail, in an embodiment, the computing system 1000 may perform initialization for each component included in the MtLM as described above.

In an embodiment, the computing system 1000 may initialize an embedding network (embedd($x$)), an encoder network ($f^e$), a regressor (head) network ($f_h$), a transfer network ($f_t$), and/or an inverse network ($f_i$) within the MtLM with random parameters ($\theta$).

In addition, in an embodiment, the computing system 1000 may establish a predetermined optimization algorithm to be applied to the MtLM.

For example, the computing system 1000 may establish an AdamW (decoupled weight decay regularization) algorithm as the optimization algorithm, and according to an embodiment, the optimization algorithm may be improved and used to independently process weight decay.

In addition, the computing system 1000 according to an embodiment of the present invention may obtain the experimental data (S103).

Herein, again, the experimental data according to an embodiment of the present invention ($x$) may be data including predetermined material unique characteristic information and material physical property specific information as learning data used for training the MtLM.

In this connection, the material unique characteristic information according to an embodiment may be information that specifies the unique characteristics possessed by a predetermined material. In other words, in an embodiment, the material unique characteristic information may be information that specifies the unique characteristics possessed by a predetermined molecule.

For example, the material unique characteristic information may include a predetermined material name, molecular structural formula, and/or chemical formula.

In addition, the material physical property specific information according to an embodiment may be information that specifies the data value that a predetermined material has for a redetermined physical property.

For example, the material physical property specific information may include physical property (in other words, domain) values such as boiling point, melting point, refractive index, solubility, viscosity, surface tension, density, strength, and/or thermal conductivity of a predetermined material.

In detail, in an embodiment, the computing system 1000 may obtain the experimental data as described above based on predetermined user input and/or connection with an external server.

In addition, the computing system 1000 according to an embodiment of the present invention may train the MtLM based on the obtained experimental data (S105).

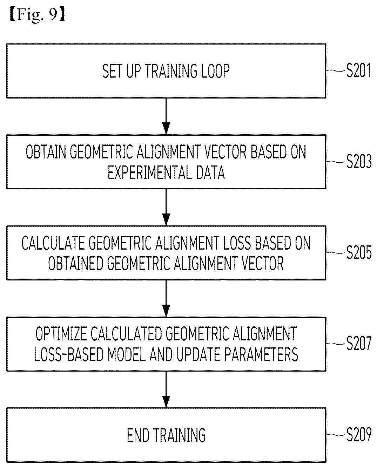

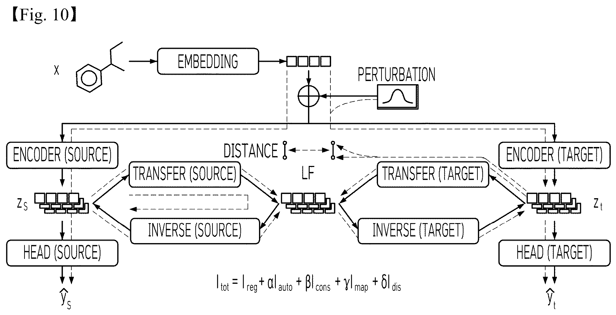

FIG. 9 illustrates a block flow diagram of a MtLM training method according to an embodiment of the present invention. FIG. 10 illustrates an example conceptual diagram of a MtLM training method according to an embodiment of the present invention.

In other words, referring to FIGS. 9 and 10, in an embodiment, the computing system 1000 may perform pre-learning for the MtLM based on the experimental data obtained as described above.

In detail, in an embodiment, the computing system 1000 may establish a training loop for the MtLM (S201).

In more detail, in an embodiment, the computing system 1000 may establish the number of epoch repetitions, the number of task repetitions, and/or the number of batch repetitions during training.

In an embodiment, the computing system 1000 may establish the training loop to repeatedly perform epoch "i" "from 1 to n (n>=1)," repeatedly perform the same for each task "t," and repeatedly perform the same for each pre-established batch "b" during training.

In addition, in an embodiment, the computing system 1000 may obtain a geometric alignment vector based on the experimental data obtained as described above (S203).

Herein, the geometric alignment vector according to an embodiment of the present invention may mean various vectors obtained through the MtLM.

In an embodiment, the geometric alignment vector may include an embedding vector (a), a perturbation vector ($\{\bar{a}\}$), an encoding vector, a transfer vector, and an inverse vector.

In detail, in an embodiment, the computing system 1000 may input the obtained experimental data into the MtLM.

In addition, in an embodiment, the computing system 1000 may 1) obtain an embedding vector based on the MtLM that inputs the experimental data.

In more detail, the computing system 1000 may transforms the input experimental data into the embedding vector through an embedding network in conjunction with the EBM of the MtLM.

Accordingly, the computing system 1000 may obtain the embedding vector transformed into a vector format by projecting the experimental data into a predetermined embedding space.

In addition, in an embodiment, the computing system 1000 may 2) generate a perturbation vector based on the obtained embedding vector.

In detail, in an embodiment, the computing system 1000 may generate a plurality of perturbation vectors (in other words, perturbation points) on a predetermined periphery based on the obtained embedding vector in conjunction with the PBM of the MtLM.

In this connection, in an embodiment, the computing system 1000 may repeatedly perform the aforementioned functional operation for each task to obtain the corresponding perturbation vector for each task.

In an embodiment, the computing system 1000 may obtain a perturbation vector corresponding to task "t" and a perturbation vector corresponding to task "s."

In addition, in an embodiment, the computing system 1000 may 3) obtain an encoding vector based on the generated perturbation vector and embedding vector.

Herein, the encoding vector according to an embodiment may include a perturbation latent vector, which is a latent vector generated based on a predetermined perturbation vector, and an original latent vector generated based on an embedding vector, which is an original vector of the perturbation vector.

In detail, in an embodiment, the computing system 1000 may transform the generated perturbation vector into a latent vector by projecting the same into a latent space corresponding to the task through an encoder network in conjunction with the encoder module of the MtLM.

In addition, in an embodiment, the computing system 1000 may transform the obtained embedding vector into a latent vector by projecting the same into a latent space corresponding to the task through an encoder network in conjunction with the encoder module of the MtLM.

Thus, in an embodiment, the computing system 1000 may obtain a perturbation latent vector and an original latent vector.

In this connection, in an embodiment, the computing system 1000 may repeatedly perform the aforementioned functional operation for each task to obtain the corresponding original latent vector and perturbation latent vector for each task.

In an embodiment, the computing system 1000 may obtain an original latent vector ($z_t$: hereinafter, t original latent vector) corresponding to the task "t" and a perturbation latent vector ($\{\bar{z}_t\}$: hereinafter, t perturbation latent vector) corresponding to the task "t."

In addition, the computing system 1000 may obtain an original latent vector ($z_s$: hereinafter, s original latent vector) corresponding to the task "s" and a perturbation latent vector ($\{\bar{z}_s\}$: hereinafter, s perturbation latent vector) corresponding to the task "s."

In addition, in an embodiment, the computing system 1000 may 4) obtain a transfer vector based on the obtained encoding vector.

Herein, the transfer vector according to an embodiment may include a perturbation transfer vector, which is a transfer vector generated based on a predetermined perturbation latent vector, and an original transfer vector, which is a transfer vector generated based on an original latent vector corresponding to the perturbation latent vector.

In detail, in an embodiment, the computing system 1000 may transform the obtained perturbation latent vector and original latent vector into a transfer vector by mapping the same to the latent space of another task (in an embodiment, the task "s" or the task "t") through the transfer network in conjunction with the TFM of the MtLM.

Thus, the computing system 1000 may obtain a perturbation transfer vector and an original transfer vector.

In this connection, in an embodiment, the computing system 1000 may repeatedly perform the aforementioned functional operation for each task to obtain the corresponding original transfer vector and perturbation transfer vector for each task.

In an embodiment, the computing system 1000 may obtain an original transfer vector ($m_t$: hereinafter, t original transfer vector) corresponding to the task "t" and a perturbation transfer vector ($\{\overline{m_t}\}$: hereinafter, t perturbation transfer vector) corresponding to the task "t."

In addition, the computing system 1000 may obtain an original transfer vector ($m_s$: hereinafter, s original transfer vector) corresponding to the task "s" and a perturbation transfer vector ($\{\overline{m_s}\}$; hereinafter, s perturbation transfer vector) corresponding to the task "s."

Thus, in an embodiment, the computing system 1000 may obtain geometric alignment vectors (in other words, the embedding vector, perturbation vector, encoding vector (including the original latent vector and the perturbation latent vector), and transfer vectors (including the original transfer vector and the perturbation transfer vector)) based on the experimental data.

In addition, in an embodiment, the computing system 1000 may 5) obtain an inverse vector based on the obtained transfer vector.

Herein, the inverse vector according to an embodiment may include a perturbation inverse vector, which is an inverse vector generated based on a predetermined perturbation transfer vector, and an original inverse vector, which is an inverse vector generated based on the original transfer vector corresponding to the perturbation transfer vector.

In detail, in an embodiment, the computing system 1000 may reconstruct the obtained perturbation transfer vector and original transfer vector through the inverse network so as to be mapped back to the original latent space and transformed into the inverse vector in conjunction with the ITM of the MtLM.

Thus, the computing system 1000 may obtain the perturbation inverse vector and the original inverse vector.

In this connection, in an embodiment, the computing system 1000 may repeatedly perform the aforementioned functional operation for each task to obtain the corresponding original inverse vector and perturbation inverse vector for each task.

In an embodiment, the computing system 1000 may obtain an original inverse vector ($\hat{z}_t$: hereinafter, t original inverse vector) corresponding to the task "t" and a perturbation inverse vector ($\overset{z'}{z}_t$ : hereinafter, t perturbation inverse vector) corresponding to the task "t."

In addition, the computing system 1000 may obtain an original inverse vector ($\hat{z}_s$: hereinafter, s original inverse vector) corresponding to the task "s" and a perturbation inverse vector ($z'_s$ : hereinafter, s perturbation inverse vector) corresponding to the task "s."

Thus, in an embodiment, the computing system 1000 may obtain geometric alignment vectors (in other words, the embedding vector, perturbation vector, encoding vector (including the original latent vector and the perturbation latent vector), transfer vectors (including the original transfer vector and the perturbation transfer vector), and inverse vectors (including the original inverse vector and the perturbation inverse vector)) based on experimental data.

In addition, in an embodiment, the computing system 1000 may calculate geometric alignment loss based on the obtained geometric alignment vector (S205).

Herein, the geometric alignment loss according to an embodiment of the present invention may mean various loss functions (Loss) computed based on various vectors (in other words, geometric alignment vectors) obtained through the MtLM.

In an embodiment, the geometric alignment loss may include a regression loss $(L_{reg})$, an autoencoder loss $(L_{auto})$, a consistency loss $(L_{cons})$, a mapping loss $(Lr_{map})$, a distance loss $(L_{dis})$, and/or an integrated loss $(L_{tot})$.

In the following description, for the sake of effective explanation, the geometric alignment loss is calculated based on the task "t."

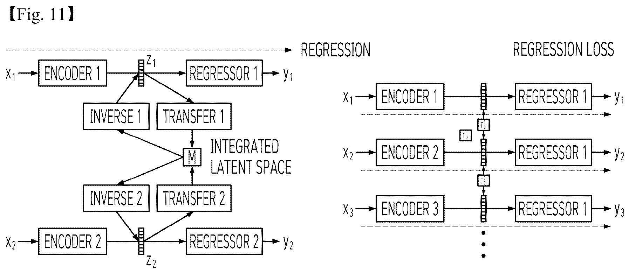

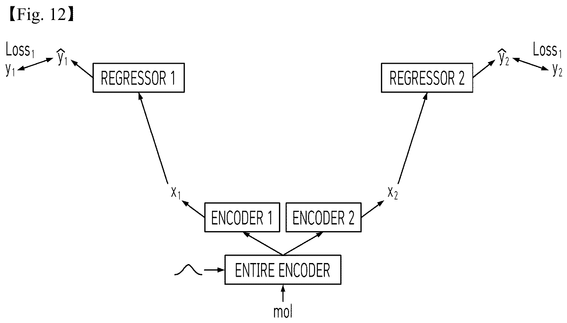

FIGS. 11 and 12 illustrate example diagrams of a method for computing regression loss according to an embodiment of the present invention.

In detail, referring to FIGS. 10 to 12, in an embodiment, the computing system 1000 may 1) compute a regression loss based on the MtLM that has obtained the geometric alignment vector.

In more detail, in an embodiment, the computing system 1000 may calculate a regression loss based on a prediction value ($\hat{y}_t$) and an actual value ($y_t$, in other words, label value) predicted through the RGM according to [Equation 1] below. Herein, the prediction value of [Equation 1] may also be expressed as "$f_h(z_t)$."

[Equation 1]

$$L_{reg} = \text{MSE}(\hat{y}_t, y_t)$$

In other words, the computing system 1000 may compute the regression loss by calculating a mean squared error (MSE) between the prediction value and the actual value.

In this connection, in an embodiment, each task may prevent mutual interference by computing an independent regression loss based on the ECM and the RGM matching each task and performing learning based thereon.

As such, the computing system 1000 may easily evaluate the regression performance of the model by computing the regression loss.

In addition, referring further to FIG. 10, in an embodiment, the computing system 1000 may 2) compute the autoencoder loss based on the MtLM that has obtained the geometric alignment vector.

In detail, in an embodiment, the computing system 1000 may compute the autoencoder loss based on the original latent vector and the original inverse vector according to [Equation 2] below.

[Equation 2]

$$L_{auto} = \text{MSE}(\hat{z}_t, z_t)$$

In other words, the computing system 1000 may compute the autoencoder loss by calculating the MSE between the latent vector and the inverse vector.

In an embodiment, the computing system 1000 may improve accuracy in the data transfer process through the autoencoder loss computed as above.

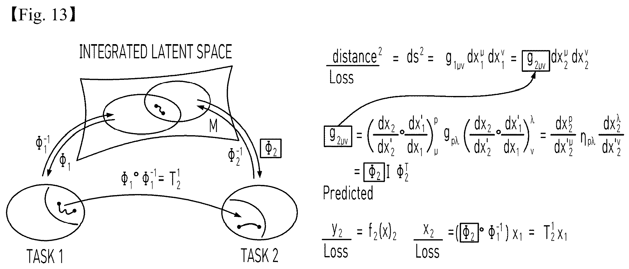

FIG. 13 illustrates an example diagram of an integrated latent space (M) mapping method according to an embodiment of the present invention.

Referring to FIG. 13, in an embodiment, the computing system 1000 may learn a bidirectional transformation matrix (TM) that may be mapped to a common integrated latent space (M) for each task.

In detail, in an embodiment, the computing system 1000 may connect latent spaces between tasks by utilizing knowledge data that contain labels for both tasks.

In this process, the computing system 1000 may compute consistency loss and mapping loss according to an embodiment.

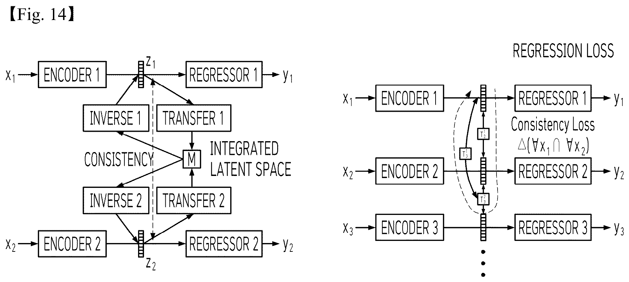

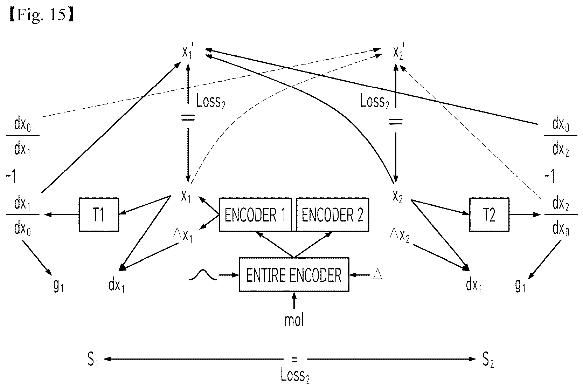

FIGS. 14 and 15 illustrate example diagrams of a consistency loss computation method according to an embodiment of the present invention.

In more detail, referring to FIGS. 10, 14 and 15, in an embodiment, the computing system 1000 may 3) compute consistency loss based on the MtLM that has obtained the geometric alignment vector.

Specifically, in an embodiment, the computing system 1000 may compute the consistency loss based on the perturbation transfer vector of the task "t'" and the perturbation transfer vector of the task "s" according to [Equation 3] below.

[Equation 3]

$$L_{cons} = \text{MSE}(\{\bar{m}_s\}, \{\bar{m}_t\})$$

In other words, the computing system 1000 may compute the consistency loss by calculating the MSE between the t perturbation transfer vector and the s perturbation transfer vector.

In this connection, in an embodiment, the computing system 1000 may derive a metric for calculating a distance in space from a transformation matrix (TM), and learn to make the distance in the latent space of each task the same based on the derived metric.

Thus, the computing system 1000 may more effectively implement the geometric alignment between tasks.

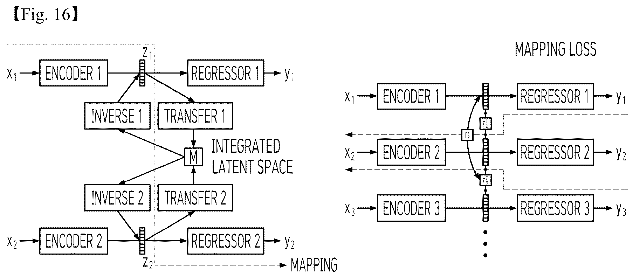

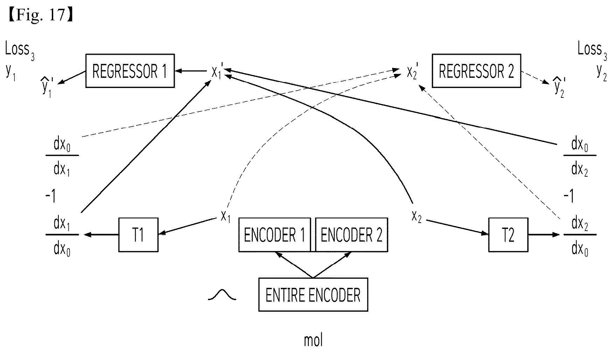

FIGS. 16 and 17 illustrate example diagrams of a mapping loss computation method according to an embodiment of the present invention.

In addition, referring to FIGS. 10, 16 and 17, in an embodiment, the computing system 1000 may 4) compute a mapping loss based on the MtLM that has obtained the geometric alignment vector.

In detail, in an embodiment, the computing system 1000 may compute the mapping loss based on a prediction value based on an actual value according to the task "t" and an original inverse vector according to the task "s" according to [Equation 4] below.

[Equation 4]

$$L_{map} = \text{MSE}(f_h(f_i(m_s)), y_t)$$

In other words, the computing system 1000 may compute the mapping loss by calculating the MSE between the actual value of the task "t" and the prediction value according to the original inverse vector of the task "s."

In an embodiment, the computing system 1000 may implement learning to transfer latent vectors from the latent space of one task to the latent space of the other task by computing the mapping loss as described above, and perform the other task based on the transferred vectors, thereby inducing latent characteristics to become similar to each other.

Thus, the computing system 1000 may evaluate the prediction performance of vectors transferred to the latent space of other tasks and induce learning in a direction to improve the same.

In addition, referring further to FIG. 10, in an embodiment, the computing system 1000 may 5) compute a distance loss based on the MtLM that has obtained the geometric alignment vector.

In detail, in an embodiment, the computing system 1000 may compute the distance loss between tasks based on the distance between the original transfer vector and the perturbation transfer vector of each task $(S_i$: hereinafter, transfer vector displacement) according to [Equation 5] and [Equation 6] below.

In more detail, in an embodiment, the computing system 1000 may calculate the distance ( $s_i^t$ : hereinafter, t transfer vector displacement) between the t original transfer vector and the t perturbation transfer vector according to the task "t" according to [(a) of Equation 5] below.

$$s_i^s$$

In addition, the computing system 1000 may calculate the distance ( : hereinafter, s transfer vector displacement) between the s original transfer vector and the s perturbation transfer vector according to the task "s" according to [(b) of Equation 5] below.

[Equation 5]

$$s_i^s = m_t - \{\bar{m}_t\} \quad (a)$$
$$s_i^t = m_s - \{\bar{m}_s\} \quad (b)$$

In addition, in an embodiment, the computing system 1000 may compute the MSE between the t transfer vector displacement and the s transfer vector displacement according to [Equation 6] below to compute the distance loss.

[Equation 6]

$$L_{dis} = \frac{1}{M} \sum_i \text{MSE}(s_i^s, s_i^t)$$

Herein, the "M" in [Equation 6] means the number of perturbation points.

In this connection, in an embodiment, the computing system 1000 may define the t transfer vector displacement and the s transfer vector displacement as displacements in the source task and the target task, respectively.

Thus, the computing system 1000 may more easily calculate the distance between the original transfer vector and the perturbation transfer vector by interpreting the t transfer vector displacement and the s transfer vector displacement as being in a flat Euclidean space.

Accordingly, the computing system 1000 may support more complete consistency maintenance of the latent space of the model.

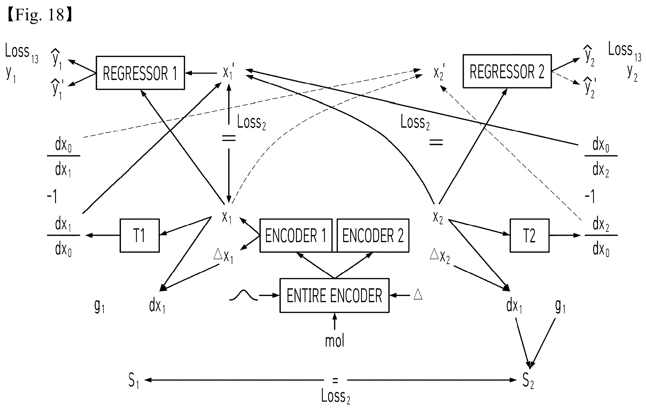

FIG. 18 illustrates an example diagram of an integrated loss computation method according to an embodiment of the present invention.

In addition, referring to FIGS. 10 and 18, in an embodiment, the computing system 1000 may 6) compute an integrated loss based on the MtLM that has obtained the geometric alignment vector.

In detail, in an embodiment, the computing system 1000 may compute the integrated loss by weighted summing the regression loss, autoencoder loss, consistency loss, mapping loss, and distance loss described above according to

[Equation 7] below.

[Equation 7]

$$L_{tot} = L_{reg} + \alpha L_{auto} + \beta L_{cons} + \gamma L_{map} + \delta L_{dis}$$

In this connection, in an embodiment, the computing system 1000 may apply weights to each loss function so that each loss function may be optimized for a specific aspect of the model.

Herein, in [Equation 7], the "$\alpha$" is the weight of the autoencoder loss, the "$\beta$" is the weight of the consistency loss, the "$\gamma$" is the weight of the mapping loss, and the "$\delta$" is the weight of the distance loss.

In an embodiment, the computing system 1000 may update parameters in a direction to minimize the integrated loss by adjusting the importance of the loss function corresponding to each weight during the learning process of the model by utilizing the above weights.

Returning to FIG. 9, in another embodiment, the computing system 1000 may also perform model optimization and parameter update based on the geometric alignment loss computed as described above (S207).

In detail, in an embodiment, the computing system 1000 may perform optimization and parameter update for the MtLM based on the integrated loss described above.

In an embodiment, the computing system 1000 may calculate a gradient based on the integrated loss for each parameter of the MtLM through backpropagation.

In addition, the computing system 1000 may perform parameter update of the MtLM using a calculated gradient and a pre-established optimization algorithm (for example, AdamW (decoupled weight decay regularization) algorithm).

Thus, the computing system 1000 may implement the MtLM optimization based on the geometric alignment loss (particularly, integrated loss).

As such, in an embodiment, the computing system 1000 may perform the MtLM optimization and parameter update learning through a combination of multiple loss functions calculated in various ways.

In this connection, each loss function may easily assist in improving the performance of the model by correcting the accuracy, consistency, and/or distance of the knowledge data mapping.

Thus, the computing system 1000 may implement a multi-tasking model that provides improved performance that overcomes the regression problem of a small data set and the limitations of existing transfer learning techniques, while more stably operating and providing improved generalization performance.

In addition, in an embodiment, the computing system 1000 may end the MtLM training (S209).

In detail, in an embodiment, the computing system 1000 may end the MtLM training process described above when a pre-established training ending condition is met.

In an embodiment, the computing system 1000 may end the MtLM training upon completion of a set training loop.

Returning to FIG. 8, the computing system 1000 according to an embodiment of the present invention may also provide the trained MtLM (S107).

In other words, in an embodiment, the computing system 1000 may provide the MtLM trained as described above in a predetermined manner.

In an embodiment, the computing system 1000 may provide the MtLM trained according to an embodiment of the present invention in conjunction with a predetermined application service (for example, a material synthesis/evaluation service, a material physical property prediction service, and/or an optimal material recommendation service).

Thus, the computing system 1000 may effectively support processing of various multi-tasking tasks using the MtLM with improved performance.

As such, in an embodiment, the computing system 1000 may provide the MtLM that provides improved performance that overcomes the regression problem of a small data set and the limitations of existing transfer learning techniques by mutually transferring and learning knowledge data of a latent space for each task through the geometric alignment in one integrated latent space in order to process a multi-task for output according to a plurality of domains, while operating more stably.

Thus, the computing system 1000 may provide a transfer learning-based multi-tasking model that operates stably and robustly with high generalization performance even in situations where the amount of given data is small, various task types are included, or regression problems are mainly dealt with.

In other words, the computing system 1000 may provide the MtLM with improved prediction performance based on knowledge distilled through geometric alignment-based transfer learning performed in conjunction with other domains, even when there is a domain among the plurality of domains (in an embodiment, physical properties) that lacks experimental data (learning data).

For example, the computing system 1000 pre-trains the MtLM based on the first to tenth physical properties for each of a plurality of molecular structural formulas, and then, when a first molecular structural formula including only data for the first to fifth physical properties is input, the computing system 1000 may more accurately predict data values for the remaining sixth to tenth physical properties for the first molecular structural formula based on the knowledge data transferred and distilled through pre-training, and generate and provide output data based thereon.

As such, the computing system 1000 according to an embodiment of the present invention may provide a multi-tasking model that implements effective transfer learning based on the geometric alignment, guarantees high generalization performance, improves prediction accuracy for regression problems, supports regularization according to a combination of various loss functions, and performs a stable learning process to guarantee robust performance.

Hereinbefore, a multi-tasking model training method and a multi-tasking performing method using a machine learning model trained based thereon according to an embodiment of the present invention can provide a multi-tasking model that maintains high performance even in a small data set by addressing the issue of insufficient data by transferring knowledge trained in a source task to a target task through transfer learning.

Accordingly, the multi-tasking model training method and the multi-tasking performing method using the machine learning model trained based thereon according to an embodiment of the present invention can expand the scope of application to fields where it was difficult to apply the machine learning model due to insufficient data or domain knowledge.

In addition, the multi-tasking model training method and the multi-tasking performing method using the machine learning model trained based thereon according to an embodiment of the present invention provide a specialized transfer learning technique that can be effectively applied to regression problems, thereby demonstrating high prediction performance even in complex regression problems such as molecular data sets.

In addition, the multi-tasking model training method and the multi-tasking performing method using the machine learning model trained based thereon according to an embodiment of the present invention can improve the efficiency of transfer learning by maintaining geometric consistency between tasks by optimizing knowledge transfer between source tasks and target tasks through a Riemannian geometric approach.

In addition, the multi-tasking model training method and the multi-tasking performing method using the machine learning model trained based thereon according to an embodiment of the present invention can further improve the generalization performance of the model by combining multiple loss functions to regularize various aspects of the model.

Accordingly, the multi-tasking model training method and the multi-tasking performing method using the machine learning model trained based thereon according to an embodiment of the present invention provide a multi-tasking model that can be universally utilized for various materials (substances), thereby improving the quality of the related industry as a whole.

The embodiments of the present invention described above may be implemented in the form of program commands which may be executed through various types of computer constituting elements and recorded in a computer-readable recording medium. The computer-readable recording medium may include program commands, data files, and data structures separately or in combination thereof. The program commands recorded in the computer-readable recording medium may be those designed and configured specifically for the present invention or may be those commonly available for those skilled in the field of computer software. Examples of a computer-readable recoding medium may include magnetic media such as hard-disks, floppy disks, and magnetic tapes; optical media such as CD-ROMs and DVDs; and hardware devices specially designed to store and execute program commands such as ROM, RAM, and flash memory. Examples of program commands include not only machine codes such as those generated by a compiler but also high-level language codes which may be executed by a computer through an interpreter and the like. The hardware device may be replaced with by one or more software modules to perform the operations of the present invention, and vice versa.

Specific executions described in the present invention are exemplary embodiments and the scope of the present invention is not limited even by any method. For brevity of the specification, descriptions of conventional electronic configurations, control systems, software, and other functional aspects of the systems may be omitted. Further, connection or connection members of lines among components exemplarily represent functions connections and/or physical or circuitry connections and may be represented as various functional connections, physical connections, or circuitry connections which are replaceable or added in an actual device. Further, unless otherwise specified, such as "essential" or "important," the connections may not be components particularly required for application of the present invention.

Further, in the detailed description of the present invention, which is described, while the present invention has been described with respect to the preferred embodiments, it will be understood by those skilled in the art or those skilled in the art having ordinary knowledge in the technical field that various changes and modifications of the present invention may be made without departing from the spirit and the technical scope of the invention described in the following claims. Accordingly, the technical scope of the present invention should not be limited to the contents described in the detailed description of the present invention but should be defined by the claims.

[Industrial Applicability]

An embodiment of the present invention relates to a multi-tasking model training method and a multi-tasking performing method using a machine learning model trained based thereon, and is applicable to the artificial intelligence industry, and thus has industrial applicability.

**Claims**

1. A method for a computing system comprising a memory and a processor to train a multi-tasking model, the method comprising:

   initializing the multi-tasking model that processes a multi-task based on a plurality of domains;
   obtaining predetermined experimental data; and
   training the multi-tasking model based on the obtained experimental data,
   wherein the training of the multi-tasking model comprises:

      obtaining a geometric alignment vector, which is a vector that supports geometric alignment between data in one integrated latent space (manifold), based on the experimental data;
      computing a geometric alignment loss based on the obtained geometric alignment vector; and
      updating parameters of the multi-tasking model based on the computed geometric alignment loss.

2. The method of claim 1, wherein the obtaining of the geometric alignment vector comprises obtaining an embedding vector transformed into a vector format by projecting the experimental data onto a predetermined embedding space based on an embedding module included in the multi-tasking model.

3. The method of claim 2, wherein the obtaining of the geometric alignment vector further comprises obtaining a plurality of perturbation vectors that move the embedding vector in a predetermined direction based on a perturbation module included in the multi-tasking model.

4. The method of claim 3, wherein the obtaining of the geometric alignment vector further comprises:

   obtaining an original latent vector by projecting the embedding vector onto a latent space of a first task (Task 1) based on an encoder module included in the multi-tasking model; and
   obtaining a perturbation latent vector by projecting the perturbation vector onto the latent space of the first task based on the encoder module included in the multi-tasking model.

5. The method of claim 4, wherein the obtaining of the geometric alignment vector further comprises:

   obtaining an original transfer vector that maps the original latent vector to the latent space of a second task (Task 2) based on a transfer module included in the multi-tasking model; and
   obtaining a perturbation transfer vector that maps the perturbation latent vector to the latent space of the second task based on the transfer module included in the multi-tasking model.

6. The method of claim 5, wherein the obtaining of the geometric alignment vector further comprises:

   obtaining an original inverse vector obtained by remapping the original transfer vector to the latent space of the first task based on an inverse transfer module included in the multi-tasking model; and
   obtaining a perturbation inverse vector obtained by remapping the perturbation transfer vector to the latent space of the first task based on the inverse transfer module included in the multi-tasking model.

7. The method of claim 6, wherein the computation of the geometric alignment loss comprises:

   computing a regression loss, an autoencoder loss, a consistency loss, a mapping loss, and a distance loss based on the geometric alignment vector; and
   computing an integrated loss by weighted summing the computed regression loss, autoencoder loss, consistency loss, mapping loss, and distance loss.

8. The method of claim 7, wherein the updating of the parameters of the multi-tasking model comprises updating the parameters in a direction that minimizes the integrated loss.

9. The method of claim 7, wherein the computation of the geometric alignment loss further comprises:

obtaining a prediction value according to the latent vector based on a regressor module included in the multi-tasking model;
calculating a mean squared error based on the obtained prediction value and a label value corresponding to the latent vector; and
computing the regression loss based on the calculated mean squared error.

10. The method of claim 7, wherein the computation of the geometric alignment loss further comprises:

calculating a mean squared error based on the original latent vector and the original inverse vector; and
computing the autoencoder loss based on the calculated mean squared error.

11. The method of claim 7, wherein the computation of the geometric alignment loss further comprises:

calculating a mean squared error based on a perturbation transfer vector mapped from the latent space of the first task to the latent space of the second task and a perturbation transfer vector mapped from the latent space of the second task to the latent space of the first task; and
computing the consistency loss based on the calculated mean squared error.

12. The method of claim 7, wherein the computation of the geometric alignment loss further comprises:

calculating a mean squared error based on a label value based on the first task and a prediction value according to the original inverse vector based on the second task; and
computing the mapping loss based on the calculated mean squared error.

13. The method of claim 7, wherein the computation of the geometric alignment loss further comprises:

calculating a first transfer vector displacement, which is a distance between the original transfer vector and the perturbation transfer vector based on the first task;
calculating a second transfer vector displacement, which is a distance between the original transfer vector and the perturbation transfer vector based on the second task;
calculating a mean squared error based on the calculated first transfer vector displacement and second transfer vector displacement; and
computing the distance loss based on the calculated mean squared error.

14. The method of claim 1, wherein the experimental data comprises material unique characteristic information, which is information specifying a unique characteristic possessed by a predetermined material, and material physical property specific information, which is information specifying a data value possessed by a predetermined material for a predetermined physical property.

15. A multi-tasking model learning server, comprising:

at least one memory; and
at least one processor for training a multi-tasking model by reading at least one application stored in the memory, wherein instructions of the processor comprise instructions for:

initializing the multi-tasking model that processes a multi-task based on a plurality of domains;
obtaining predetermined experimental data;
obtaining a geometric alignment vector, which is a vector that supports geometric alignment between data in one integrated latent space (manifold), based on the obtained experimental data;
computing a geometric alignment loss based on the obtained geometric alignment vector; and
updating parameters of the multi-tasking model based on the computed geometric alignment loss.

【Fig. 1】

1000

110 USER COMPUTING DEVICE
112 MEMORY
111 PROCESSOR(S)
113 DATA
114 INSTRUCTION
120 MACHINE LEARNING MODEL(S)
121 USER INPUT COMPONENT

170 NETWORK

130 SERVER COMPUTING SYSTEM
132 MEMORY
131 PROCESSOR(S)
133 DATA
134 INSTRUCTION
140 MACHINE LEANING MODEL(S)

150 TRAINING COMPUTING SYSTEM
152 MEMORY
151 PROCESSOR(S)
153 DATA
154 INSTRUCTION
160 MODEL TRAINER
161 TRAINING DATA

【Fig. 2】

COMPUTING DEVICE 100

APPLICATION 1
- MACHINE LEARNING LIBRARY 1
- MACHINE LEARNING MODEL 1

APPLICATION 2
- MACHINE LEARNING LIBRARY 2
- MACHINE LEARNING MODEL 2

APPLICATION 3
- MACHINE LEARNING LIBRARY 3
- MACHINE LEARNING MODEL 3

APPLICATION N
- MACHINE LEARNING LIBRARY N
- MACHINE LEARNING MODEL N

SENSOR(S)

CONTEXT MANAGER

DEVICE STATE

ADDITIONAL COMPONENT(S)

【Fig. 3】

【Fig. 4】

TASK 1    TASK 2    TASK 3    ...    TASK n

MULTI-TASKING LEARNING MODEL
(MtLM)

TASK 1    TASK 2    TASK 3    ...    TASKn

【Fig. 5】

INTEGRATED
LATENT SPACE

MELTING POINT

THERMAL CONDUCTIVITY

BOILING POINT

DENSITY

REFRACTIVE INDEX

VISCOSITY

SOLUBILITY
ADD NEW MATERIAL
PROPERTY
STRENGTH

【Fig. 6】

MULTI-TASKING LEARNING MODEL (MtLM)

EMBEDDING MODULE (EBM)

ENCODER MODULE (ECM)

REGRESSOR MODULE (RGM)

TRANSFER MODULE (TFM)

INVERSE TRANSFER MODULE (ITM)

PERTURBATION MODULE (PBM)

LOSS CALCULATION MODULE (LCM)

【Fig. 7】

【Fig. 8】

INITIATE MULTI-TASKING LEARNING MODEL —S101

↓

OBTAIN EXPERIMENTAL DATA —S103

↓

TRAIN MULTI-TASKING LEARNING MODEL BASED ON OBTAINED EXPERIMENTAL DATA —S105

↓

PROVIDE TRAINED MULTI-TASKING LEARNING MODEL —S107

【Fig. 9】

```
┌─────────────────────────────────────────┐
│          SET UP TRAINING LOOP            │──S201
└─────────────────────────────────────────┘
                    │
                    ▼
┌─────────────────────────────────────────┐
│  OBTAIN GEOMETRIC ALIGNMENT VECTOR BASED ON │──S203
│           EXPERIMENTAL DATA              │
└─────────────────────────────────────────┘
                    │
                    ▼
┌─────────────────────────────────────────┐
│  CALCULATE GEOMETRIC ALIGNMENT LOSS BASED ON │──S205
│    OBTAINED GEOMETRIC ALIGNMENT VECTOR   │
└─────────────────────────────────────────┘
                    │
                    ▼
┌─────────────────────────────────────────┐
│   OPTIMIZE CALCULATED GEOMETRIC ALIGNMENT │──S207
│   LOSS-BASED MODEL AND UPDATE PARAMETERS │
└─────────────────────────────────────────┘
                    │
                    ▼
┌─────────────────────────────────────────┐
│             END TRAINING                 │──S209
└─────────────────────────────────────────┘
```

【Fig. 10】

$$I_{tot} = I_{reg} + \alpha I_{auto} + \beta I_{cons} + \gamma I_{map} + \delta I_{dis}$$

【Fig. 11】

REGRESSION

REGRESSION LOSS

【Fig. 12】

$Loss_1$
$y_1$ ← $\hat{y}_1$ ← REGRESSOR 1

REGRESSOR 2 → $\hat{y}_2$ ← $Loss_1$
$y_2$

$x_1$

$x_2$

ENCODER 1 | ENCODER 2

ENTIRE ENCODER

mol

【Fig. 13】

INTEGRATED LATENT SPACE

TASK 1

TASK 2

$$\frac{distance^2}{Loss} = ds^2 = g_{1\mu\nu}\, dx_1^\mu\, dx_1^\nu = \boxed{g_{2\mu\nu}}\, dx_2^\mu\, dx_2^\nu$$

$$\boxed{g_{2\mu\nu}} = \left(\frac{dx_2}{dx_2'}\circ\frac{dx_1'}{dx_1}\right)_\mu^\rho g_{\rho\lambda}\left(\frac{dx_2}{dx_2'}\circ\frac{dx_1'}{dx_1}\right)_\nu^\lambda = \frac{dx_2^\rho}{dx_2'^\mu}\,\eta_{\rho\lambda}\,\frac{dx_2^\lambda}{dx_2'^\nu}$$

$$= \boxed{\Phi_2}\, I\, \Phi_2^T$$

Predicted

$$\frac{y_2}{Loss} = f_2(x)_2 \qquad \frac{x_2}{Loss} = (\boxed{\Phi_2}\circ\Phi_1^{-1})\, x_1 = T_2^1 x_1$$

【Fig. 14】

【Fig. 15】

【Fig. 16】

【Fig. 17】

【Fig. 18】

## INTERNATIONAL SEARCH REPORT

| International application No. |
|---|
| **PCT/KR2024/008734** |

| A. | CLASSIFICATION OF SUBJECT MATTER |
|---|---|

**G06N 3/096**(2023.01)i; **G06N 3/045**(2023.01)i; **G06N 3/0455**(2023.01)i

According to International Patent Classification (IPC) or to both national classification and IPC

| B. | FIELDS SEARCHED |
|---|---|

Minimum documentation searched (classification system followed by classification symbols)

G06N 3/096(2023.01); G06N 20/00(2019.01); G06N 3/04(2006.01); G06N 3/08(2006.01); G16B 20/00(2019.01); G16B 40/20(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 도메인(multi-domain), 다중 태스크(multi-task), 기하학적 정렬 벡터 (geometric alignment vector), 기하학적 정렬 손실(geometric alignment loss), 잠재 공간(latent space), 임베딩(embedding)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | POKLUKAR, Petra et al. Geometric Multimodal Contrastive Representation Learning. arXiv:2202.03390v4. November 2022. [Retrieved on 11 September 2024]. Retrieved from <https://arxiv.org/pdf/2202.03390>.<br>See sections 3 and 5-5.1; and figure 3. | 1-2,14-15 |
| Y | | 3-4 |
| A | | 5-13 |
| Y | SEO, Hyun. Deep Neural Network Latent Space Analysis using Decision Boundary and Attention Style CapsuleNet. 서울대학교 대학원 협동과정 계산과학전공 학위논문 (Ph.D. thesis, Interdisciplinary Program of Computational Science and Technology, Graduate School of Seoul National University). February 2022.<br>See page 7. | 3-4 |
| A | KR 10-2021-0018333 A (QUANTUM-SI INCORPORATED) 17 February 2021 (2021-02-17)<br>See paragraphs [0102]-[0103]; and figure 3. | 1-15 |
| A | KR 10-2023-0018398 A (GOOGLE LLC) 07 February 2023 (2023-02-07)<br>See paragraphs [0063] and [0068]. | 1-15 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 September 2024** | **24 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/008734** |

### C. DOCUMENTS CONSIDERED TO BE RELEVANT

| Category* | Citation of document, with indication, where appropriate, of the relevant passages | Relevant to claim No. |
| --- | --- | --- |
| A | JP 7102080 B2 (KDDI CORPORATION) 19 July 2022 (2022-07-19)<br>See claims 1-2. | 1-15 |
| PX | YIM, Soorin et al. Task Addition in Multi-Task Learning by Geometrical Alignment. ICML2024-AI4Science. Poster, 17 June 2024.<br>See entire document. | 1-15 |

Form PCT/ISA/210 (second sheet) (July 2022)

**INTERNATIONAL SEARCH REPORT**
Information on patent family members

International application No.

**PCT/KR2024/008734**

| Patent document cited in search report | | | Publication date (day/month/year) | Patent family member(s) | | | Publication date (day/month/year) |
|---|---|---|---|---|---|---|---|
| KR | 10-2021-0018333 | A | 17 February 2021 | AU | 2019-276730 | A1 | 10 December 2020 |
| | | | | BR | 112020023429 | A2 | 23 February 2021 |
| | | | | CA | 3100065 | A1 | 05 December 2019 |
| | | | | CN | 112513990 | A | 16 March 2021 |
| | | | | EP | 3803884 | A2 | 14 April 2021 |
| | | | | JP | 2021-526259 | A | 30 September 2021 |
| | | | | JP | 7490576 | B2 | 27 May 2024 |
| | | | | MX | 2020012899 | A | 26 February 2021 |
| | | | | US | 2019-0370616 | A1 | 05 December 2019 |
| | | | | US | 2019-0371476 | A1 | 05 December 2019 |
| | | | | US | 2020-0350081 | A9 | 05 November 2020 |
| | | | | WO | 2019-231624 | A2 | 05 December 2019 |
| | | | | WO | 2019-231624 | A3 | 19 March 2020 |
| KR | 10-2023-0018398 | A | 07 February 2023 | CN | 115885298 | A | 31 March 2023 |
| | | | | EP | 4154182 | A1 | 29 March 2023 |
| | | | | JP | 2023-538799 | A | 12 September 2023 |
| | | | | JP | 7448693 | B2 | 12 March 2024 |
| | | | | US | 2024-0221371 | A1 | 04 July 2024 |
| | | | | WO | 2023-009101 | A1 | 02 February 2023 |
| JP | 7102080 | B2 | 19 July 2022 | JP | 2021-056667 | A | 08 April 2021 |

Form PCT/ISA/210 (patent family annex) (July 2022)